# EUROPÄISCHE PATENTSCHRIFT

(11) **EP 0 442 100 B1**
(45) Veröffentlichungstag und Bekanntmachung des Hinweises auf die Patenterteilung: **27.07.1994**
(21) Anmeldenummer: 90124502.7
(22) Anmeldetag: 18.12.1990
(51) Int. Cl.: F16C 35/02

(54) **Lagerbock für Wellenlager**
Shaft bearing support
Support de palier d'arbre

(30) Priorität: 15.02.1990 DE 4004643
(43) Veröffentlichungstag der Anmeldung: 21.08.1991
(73) Patentinhaber: MERCEDES-BENZ AG, 70327 Stuttgart (DE)
(72) Erfinder: Blauss, Friedrich, W-7000 Stuttgart 70 (DE)

(56) Entgegenhaltungen:
- WO-A-86/01266
- DE-A- 2 709 475
- DE-A- 2 809 438
- DE-C- 158 065
- GB-A- 381 103
- US-A- 3 383 142

## Beschreibung

Die Erfindung betrifft einen Lagerbock für Wellenlager, mit den Merkmalen des Oberbegriffs von Patentanspruch 1. Bei einem Lagerbock dieser Art, wie er aus der GB-PS 381 103 bekannt ist, sind zwei Ringhälften gegeben, von denen die obere und die untere Hälfte mit ihrem inneren Ring jeweils die gleichen Breiten haben und über die ganze axiale Länge in der Teilungsebene aufeinander aufliegen. An der oberen bzw. unteren Ringfläche sind jeweils die Flansche vorgesehen, wobei die Flansche sich jeweils über die halbe Breite der axialen Länge der Ringe erstrecken und mit ihren ebenen Stirnseiten flächig aneinander anliegen.

Soweit bei solchen Lagerböcken eine Zentrierung gegeben ist , ist diese Zentrierung erreicht durch einen bogenförmigen Kontakt zwischen dem Außenumfang einer Ringfläche und dem über die Teilungsebene hinausstehenden inneren Flanschrand. Dies bedingt nachteiligerweise, daß hier nur eine axiale Zusammensteckbarkeit gegeben ist.

Der Erfindung liegt die Aufgabe zugrunde, einen Lagerbock in einer Ausbildung gemäß dem Oberbegriff des Patentanspruches 1 anzugeben, der in Achsrichtung schmal baut und dessen Ringhälften sich bei Schließen des Lagerbocks, unabhängig von der Lagerbuchse und ohne zusätzliche Paßverbindungsmittel, bezogen auf die Lagerbohrung, radial und axial selbsttätig exakt ausrichten.

Diese Aufgabe wird erfindungsgemäß durch die kennzeichnenden Merkmale des Patentanspruches 1 gelöst.

Vorteilhafte Ausgestaltungen der Erfindung sind Gegenstand von Unteransprüchen.

Bei der erfindungsgemäßen Konstruktion erstrecken sich somit die die Flanschteile bildenden Ansätze der Ringhälften jeweils in einer zur Achse der Lagerbohrung senkrecht liegenden Ebene, wobei die die Flanschteile miteinander verspannenden Spannmittel sich achsparallel zur Lagerbohrung erstrecken.

Diese Anordnung der Spannmittel erlaubt zugleich deren Verwendung zur Befestigung des Lagerbockes an einem Träger, wobei in diesem Falle eine Stirnseite des Lagerbockes dem Träger zugekehrt ist. Diese Anbaumöglichkeit erweist sich als vorteilhaft, sofern der Lagerbock an einem beispielsweise plattenförmigen, vertikalen Träger anzubauen ist, der von dem zu lagernden Teil durchsetzt ist.

Die in einer zur Achse der Lagerbohrung senkrechten Ebene aneinander anliegenden Flanschteile legen beim Schließen des Lagerbockes dessen beiden Ringhälften in ihrer gegenseitigen Montagestellung in Achsrichtung zueinander fest, während durch die an den einander zugekehrten Stirnseiten der Flanschteile angeformten, mit entsprechenden Gegenflächen des jeweils korrespondierenden Flanschteils sich formschlüssig in Eingriff befindenden Stufenflanken die Ringhälften in radialer Richtung exakt ausgerichtet und damit deren halbkreisförmigen Lagervertiefungen auf die Lagerachse zentriert werden.

Aufgrund dieser gegenseitigen axialen und radialen Fixierung beider Ringhälften ist dabei der Lagerbock mit besonderem Vorteil zur Aufnahme einer aus bedingt nachgiebigem Kunststoff bestehenden Lagerbuchse geeignet. Mit einer derartigen Lagerbuchse ausgestattete Lager lassen sich besonders günstig zur ein- oder mehrfachen Lagerung von Wellen, insbesondere Getriebeschaltwellen, die sich beispielsweise in Omnibussen zwischen Fahrzeugbug und Fahrzeugheck erstrecken, einsetzen. Wird in diesem Falle ein Wechsel der Lagerbuchse fällig, lassen sich durch Lösen der Befestigungsschrauben des Lagerbockes dessen beiden Ringhälften gleichzeitig vom Lagerträger abnehmen, so daß lediglich noch die elastomere Lagerbuchse auf der Schaltwelle verbleibt. Diese kann dann radial aufgeschnitten und zum Entfernen von der Welle entsprechend auseinandergebogen werden.

Ebensogut kann eine derart geschlitzte neue Lagerbuchse wieder auf die Welle aufgebracht und danach durch Zusammensetzen und Befestigen der Ringhälften am Träger auf dieser festgelegt werden.

Außerdem gestattet die Erfindung gleich vorteilhaft auch die Verwendung von geteilten Lagerbuchsen, insbesondere, wenn diese aus Metall bestehen.

Die axiale Festlegung der Lagerbuchse bzw. von Buchsensegmenten im Lagerbock geschieht vorteilhaft in der Weise, daß die Ringhälften mit ihrem, die Lagerbuchse umgreifenden Teilstück in eine äußere Buchsenumfangsnut formschlüssig eingreifen.

In der Zeichnung ist ein Ausführungsbeispiel der Erfindung dargestellt. Es zeigen:
- Figur 1: eine Vorderansicht des Lagerbockes ohne Lagerbuchse, dessen Ringhälften zwar zusammengesteckt jedoch nicht miteinander verschraubt sind,
- Figur 2: eine Ansicht gemäß Figur 1, wobei die beiden Ringhälften voneinander gelöst dargestellt sind,
- Figur 3: einen Schnitt entlang der Linie III-III der Figur 2 und
- Figur 4: einen Schnitt entlang der Linie IV-IV der Figur 1.

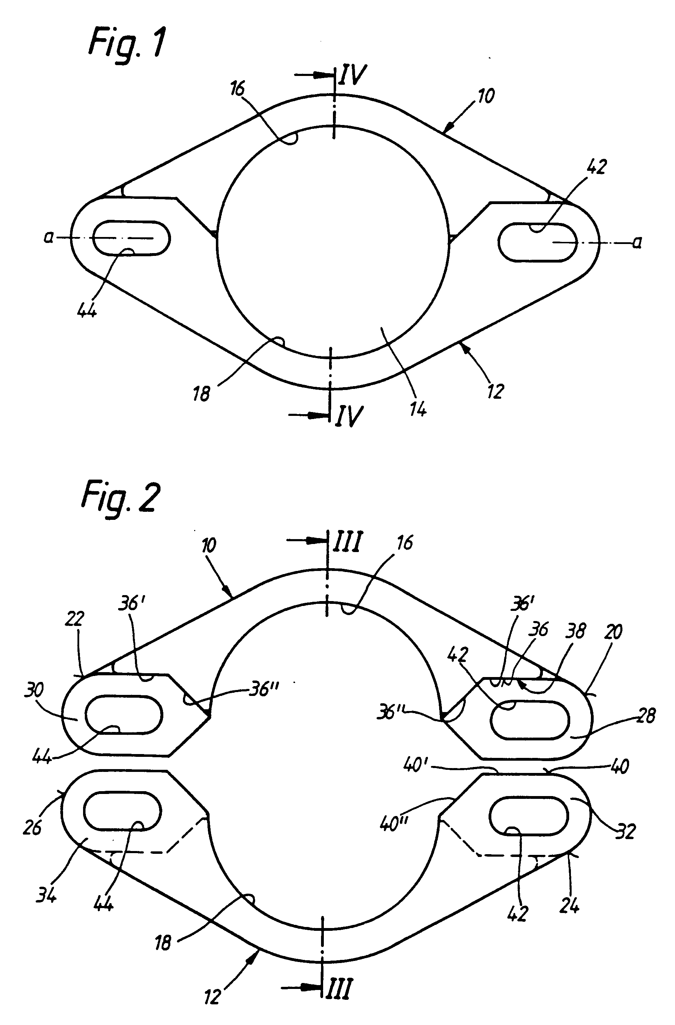

Der in Figur 1 gezeigte Lagerbock ist durch zwei gegenseitig in Eingriff miteinander gebrachte Ringhälften 10 und 12 gebildet, die jeweils eine halbkreisförmige, sich bei zusammengesetzten Ringhälften 10 und 12 zu einer zylindrischen Lagerbohrung 14 ergänzende, randoffene Vertiefung 16 bzw. 18 aufweisen.

Beide Ringhälften 10 und 12 sind jeweils, bezogen auf die Teilungsebene a-a des Lagerbockes, mit zwei einander diametral gegenüberliegenden bzw. seitlichen Ansätzen ausgestattet, die Flanschteile 20 und 22 bzw. 24 und 26 bilden, welche sich in einer zur Achse der Lagerbohrung 14 senkrecht liegenden Ebene erstrecken. Diese entsprechen sich in ihrer Ausbildung derart, daß sie in zusammengesetztem Zustand beider Ringhälften 10 und 12 einander bündig überdecken und die Ringhälften 10 und 12 in einer Richtung zueinander axial und außerdem in beiden Radialrichtungen zueinander durch formschlüssigen Eingriff der Flanschteile 20, 22, 24, 26 derart festlegen, daß der Krümmungsradius beider halbkreisförmigen Vertiefungen 16 und 18 einen gemeinsamen, von der Lagerachse durchdrungenen Mittelpunkt haben. Die beiden Ringhälften 10 und 12 sind dabei in Achsrichtung derart zueinander festgelegt, daß sie sich in einer gemeinsamen Ebene b-b befinden.

Zu diesem Zweck sind die Flanschteile 20 und 22 bzw. 24 und 26 stufenförmig derart abgesetzt, daß sich deren ebenen, einander zugekehrten Stirnseiten 28 und 30 bzw. 32 und 34 in der senkrecht zur Lagerachse liegenden Ebene b-b befinden. Die Stufenflansche 36 der als ganzes mit 38 bezeichneten Stufe ist zur jeweiligen Stirnseite 28 bzw. 30 bzw. 32 bzw. 34 vorzugsweise senkrecht angeordnet und weist zwei ebene Flankenabschnitte 36' und 36'' auf. Diese sind einander derart zugeordnet, daß sie für den den Flanschteil 28 bzw. 30 der einen Ringhälfte 10 überdeckenden Flanschteil 32 bzw. 34 der anderen Ringhälfte 12 eine prismatische Abstützbasis zur radialen Fixierung der Ringhälften 10 und 12 in zueinander senkrechten Richtungen bilden (Figur 2).

Hierzu erstreckt sich der Flankenabschnitt 36' parallel zur Teilungsebene a-a, während der sich an diesen anschließende Flankenabschnitt 36'' unter einem Winkel von vorzugsweise 45° bis zur Teilungsebene a-a und in Richtung auf die Vertiefung 16 bzw. 18 der Ringhälften 10 bzw. 12 verläuft.

Die Flanschteile 28, 30 bzw. 32 und 34 beider Ringhälften 10 und 12 sind zueinander komplementär ausgebildet, so daß die zu einer Ringhälfte 10 oder 12 gehörenden Flanschteile 28 und 30 bzw. 32 und 34 mit ihren Flankenabschnitten 36' und 36'' mit jeweils zu diesen parallelen Abschnitten 40' bzw. 40'' der die zur anderen Ringhälfte gehörenden Flanschteile 28, 30 bzw. 32, 34 begrenzenden Umfangskante 40 in formschlüssiger und gegenseitig überdeckender Berührung und somit bei Belastung in der Ebene b-b momentfrei sind. Außerdem bietet diese Ausbildung den wesentlichen Vorteil, beide Ringhälften 10 und 12 mittels des gleichen Form- oder Schmiedewerkzeuges anfertigen zu können.

Zum gegenseitigen Verspannen beider Ringhälften 10 und 12 sind deren Flanschteile 20, 22 bzw. 24, 26 von jeweils einem Durchbruch 42 bzw. 44 parallel zur Achse der Lagerbohrung 14 durchsetzt, in welche geeignete Befestigungsschrauben einzubringen sind. Mit deren Hilfe läßt sich dabei der Lagerbock zugleich an einem beispielsweise vertikal angeordneten Lagerträger befestigen.

Die Durchbrüche 42 und 44 sind vorzugsweise in der Teilungsebene a-a angeordnet und als Langlöcher ausgebildet, um den Lagerbock in noch unverspanntem Zustand seiner Ringhälften 10 und 12 am nicht dargestellten Lagerträger relativ zu einer zu lagernden Welle 45 entsprechend einrichten zu können. Die Achsrichtung der Ausnehmungen 42 und 44 parallel zur Lagerachse bietet hierbei den Vorteil, die Ringhälften 10 und 12 sehr schmal ausbilden zu können.

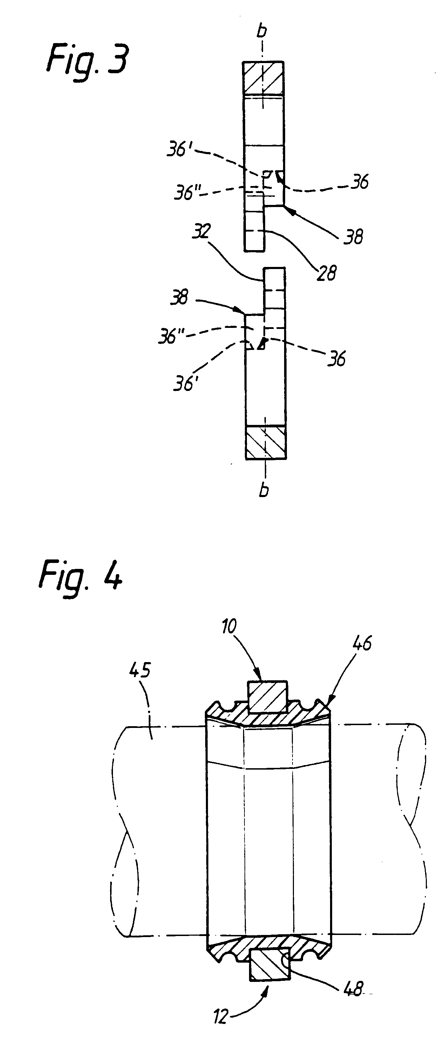

Aus Figur 4 ist zu ersehen, daß beide Ringhälften 10 und 12 eine aus Kunststoff bestehende Lagerbuchse 46 zwischen sich, axial gesichert, aufnehmen, indem sie mit einer Außenumfangsnut 48 derselben formschlüssig in Eingriff sind.

Die Breite der Langlöcher 42 und 44 ist dem Durchmesser der Befestigungsschrauben vorzugsweise derart eng toleriert angepaßt, daß beide Ringhälften 10 und 12 senkrecht zur Teilungsebene a-a im wesentlichen spielfrei zueinander fixiert sind. Somit wird zwangsläufig auch die Lagerbuchse 46 im Lagerbock radial spielfrei gehalten, was beispielsweise im Falle einer zu lagernden Getriebeschaltwelle für die Qualität des Getriebeschaltens von ausschlaggebender Bedeutung ist.

## Patentansprüche

1. Lagerbock für Wellenlager, dessen seitlich an den die Lagerbohrung (14) umschließenden Ringhälften (10, 12) liegende, einander entsprechende Flanschteile (20, 22, 24, 26) axiale Durchbrüche (42, 44) für die Ringhälften (10, 12) zusammenhaltende Spannmittel aufweisen, und die Ringhälften (10, 12) an einer Seite ihrer Flanschteile (20, 22, 24, 26) stufenförmig abgesetzt sind, wobei die Stufenflanken (36) und mit diesen korrespondierende Flächenteile der jeweils anderen Ringhälfte Zentrierflächen bilden,
**dadurch gekennzeichnet,**
daß die Flanschteile (20 und 24 bzw. 22 und 26) der beiden identischen Ringhälften (10, 12) an ihren axial gegenüberliegenden Stirnseiten (28 und 32 bzw. 30 und 34) stufenförmig abgesetzt sind und daß die im Übergang zu korrespondierenden Flanschteilen (24, 20 bzw. 26, 22) beider Ringhälften (12, 10) liegenden und von deren gleicher Stirnseite (28, 30 bzw. 32, 34) ausgehenden Stufenflanken (36) jeweils zwei ebene, winklig zueinander stehende Flankenabschnitte (36', 36'') aufweisen, von denen der eine Flankenabschnitt (36') parallel zur Gehäuseteilungsebene (a-a) verläuft und der andere Flankenabschnitt (36'') ausgehend vom inneren Ende des zur Teilungsebene (a-a) parallelen Flankenabschnittes (36'') sich bis zur Teilungsebene (a-a) erstreckt.

2. Lagerbock nach Anspruch 1,
**dadurch gekennzeichnet,**
daß die die Flanschteile (20, 22 bzw. 24, 26) durchsetzenden Durchbrüche (42 und 44) in der Teilungsebene a-a der Ringhälften (10 und 12) angeordnet und sich radial zur Lagerbohrung (14) erstreckende Langlöcher sind.

3. Lagerbock nach Anspruch 2,
**dadurch gekennzeichnet,**
daß die Breite der Langlöcher (42 u. 44) dem Durchmesser der Befestigungsschrauben bildenden Spannmittel eng toleriert angepaßt ist.

## Claims

1. A bearing block for main shaft bearings, the mutually corresponding flange parts (20, 22, 24, 26) of which, situated laterally on the ring halves (10, 12) surrounding the bearing hole (14) have axial openings (42, 44) for clamping means holding the ring halves (10, 12) together, and the ring halves (10, 12) on one side of their flange parts (20, 22, 24, 26) are offset stepwise, the step sides (36) and surface parts of the respectively other ring half corresponding to them forming centring surfaces, characterized in that the flange parts (20 and 24, and 22 and 26) of the two identical ring halves (10, 12) are offset stepwise at their axially opposite front sides (28 and 32 and 30 and 34), and in that the step sides (36) situated at the transition to the corresponding flange parts (24, 20 and 26, 22) of the two ring halves (12, 10) and starting out from their same front side (28, 30 and 32, 34) respectively have two plane side portions (36', 36'') at an angle to each other, of which the one side portion (36') extends parallel to the housing dividing plane (a-a) while the other side portion (36''), starting from the inner end of the side portion (36'') parallel to the dividing plane (a-a) extends as far as the dividing plane (a-a).

2. A bearing block according to claim 1, characterized in that the openings (42 and 44) passing through the flange parts (20, 22 and 24, 26) are arranged in the dividing plane a-a of the ring halves (10 and 12) and are longitudinal holes extending radially to the bearing hole (14).

3. A bearing block according to claim 2, characterized in that the width of the longitudinal holes (42 and 44) is matched with a close tolerance to the diameter of the clamping means forming securing screws.

## Revendications

1. Corps de palier pour palier d'arbre, comprenant des parties de bridage ou pattes (20, 22, 24, 26) mutuellement correspondantes, situées latéralement sur des demi-anneaux (10, 12) entourant l'alésage (14) du palier, pattes qui présentent des ouvertures axiales (42, 44) pour des moyens de serrage maintenant les demi-anneaux (10, 12) ensemble, et dont les demi-anneaux (10, 12) sont réduits en épaisseur, par un gradin, sur un côté de leurs pattes ou oreilles (20, 22, 24, 26), les flancs (36) formés par les gradins et des parties de surface correspondant à eux de l'autre demi-anneau formant des surfaces de centrage, caractérisé en ce que les pattes (20 et 24 ou 22 et 26) des deux demi-anneaux (10, 12), qui sont identiques, sont réduites, par un gradin, sur leurs côtés frontaux (28 et 32 respectivement 30 et 34) axialement opposés, et que les flancs (36) formés par les gradins, situés à la transition des deux demi-anneaux (12, 10) aux pattes correspondantes (24, 20 ou 26, 22) et s'étendant à partir du même côté frontal (28, 30 ou 32, 34), comportent chacun deux parties de flanc (36', 36'') planes, formant un angle entre elles, dont une partie de flanc (36') est parallèle au plan de division (a-a) du corps de palier et dont l'autre partie de flanc (36''), partant de l'extrémité intérieure de la partie de flanc (36') parallèle au plan de division (a-a), s'étend jusqu'au plan de division (a-a).

2. Corps de palier selon la revendication 1, caractérisé en ce que les ouvertures (42 et 44) traversant les pattes (20, 22 ou 24, 26), sont des trous oblongs disposés dans le plan de division (a-a) des demi-anneaux (10 et 12) et s'étendant radialement par rapport à l'alésage (14) du palier.

3. Corps de palier selon la revendication 2, caractérisé en ce que la largeur des trous oblongs (42 et 44) est adaptée avec des tolérances serrées au diamètre de vis de fixation formant les moyens de serrage.
